# EUROPEAN PATENT APPLICATION

(11) **EP 4 560 520 A1**
(43) Date of publication of application: **28.05.2025**
(21) Application number: 24178141.8
(22) Date of filing: 27.05.2024
(51) Int. Cl.: G06F 30/36, G06F 30/392, G06F 30/398

(54) **REAL-TIME PROCESS MARGIN-BASED LAYOUT OPTIMIZATION**

(30) Priority: 27.11.2023 US 202318520275
(71) Applicant: GlobalFoundries U.S. Inc., Malta, NY 12020 (US)
(72) Inventor: Tranter, Collin, Malta, 12020 (US); Feuillette, Romain, Essex Junction, 05452 (US); Pritchard, David, Malta, 12020 (US); Jain, Navneet, Santa Clara, 95054 (US); Pavek, Nolan, Malta, 12020 (US); Burgess, Stehpen T., Malta, 12020 (US)
(74) Representative: Grünecker Patent- und Rechtsanwälte PartG mbB

(57) **Abstract**

Layout design for an electronic device may be performed by providing a representation of a first layout to a client and providing, in response to an input from the client, a collection of design information calculated according to the first layout to the client. The collection of design information may include a dimension extracted from the first layout, and may further include parasitics information related to the dimension, margin information related to a ground rule applicable to the dimension, or both. The collection of design information may be provided to the client as a real-time response to inputs received from the client. By providing the parasitics information, the margin information, or both to the client, the design of sub-ground-rule layouts may be performed in less time and using fewer resources than would otherwise be the case.

## Description

### FIELD OF THE DISCLOSURE

The present disclosure relates to electronic device design, and in particular to designing layouts for electronic devices where the layouts do not conform to layout ground rules for the technology which will be used to implement the semiconductor device.

### BACKGROUND

Design rules ensure that a design of an electronic device, such as an integrated circuit, will produce a device with acceptable performance, reliability, manufacturing yield, or combinations thereof. Design rules specify, for example, constraints on width, spacing, areas, aspect ratios, fill density, and the like for elements of integrated circuit, and may be specific to the process that will be used to manufacture the integrated circuit.

A set of design rules for a process with which the device is intended to be implemented with may include ground rules for layout of elements of the device. The ground rules are set so that the layout of the elements results in a device that meets or exceeds predetermined criteria for manufacturability, reliability, performance metrics, or combinations thereof.

Normally, a device would be required to conform to the ground rules, and accordingly an Electronic Design Automation (EDA) tool for performing layout (a layout tool) may constrain the layout of the device so that it conforms to the ground rules, report any violation of the ground rules, or both. For example, a layout tool may snap shape edges to ground rule values.

However, in some cases, there may be significant device performance advantages obtainable by allowing the layout of the elements of the device to not conform to the ground rules; such a non-conforming layout may be referred to as a sub-ground-rule layout. However, it would be futile to create a sub-ground-rule layout if doing so rendered the resulting device inoperable, excessively hard to manufacture, prone to breakdown, or unable to meet the desired design objectives.

Accordingly, a need exists for tools that better support the design of devices with sub-ground-rule layouts.

### SUMMARY

Embodiments of the present disclosure relate to methods, systems, software, user interfaces, and application programming interfaces for designing electronic devices, and in particular to methods, systems, software, user interfaces, and application programming interfaces for performing layout of elements of an electronic device.

In an embodiment, a method for performing layout design for an electronic device comprises providing a representation of a first layout to a client, and providing, to the client in response to an input from the client, a collection of design information calculated according to the first layout. The collection of design information includes a dimension extracted from the first layout, and further includes parasitics information related to the dimension, margin information related to a ground rule applicable to the dimension, or both.

In another embodiment, a system for performing layout design for an electronic device comprises at least one processor. The system is configured to perform steps comprising providing a representation of a first layout to a client, and providing, in response to an input from the client, a collection of design information calculated according to the first layout to the client. The collection of design information includes a dimension extracted from the first layout, and further includes parasitics information related to the dimension, margin information related to a ground rule applicable to the dimension, or both.

In another embodiment, a non-transient computer readable media (CRM) comprises computer programming instructions which, when executed by one or more processors of a system, cause the system to perform steps comprising providing a representation of a first layout to a client, and providing, in response to an input from the client, a collection of design information calculated according to the first layout to the client. The collection of design information includes a dimension extracted from the first layout, and further included parasitics information related to the dimension, margin information related to a ground rule applicable to the dimension, or both.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 illustrates a layout design tool (hereinafter referred to as a layout tool) of a device according to an embodiment.
FIG. 2A illustrates a layout of a device according to an embodiment.
FIGS. 2B and 2C illustrate operations on the layout shown in FIG. 2A that may be performed by a layout tool according to an embodiment.
FIG. 3 illustrates an interface for selecting ground rules according to an embodiment.
FIG. 4 illustrates a process performed by a layout tool according to an embodiment.
FIGS. 5A and 5B illustrate operations related to parasitics information performed by a layout tool according to an embodiment.
FIG. 6 illustrates a process performed by a layout tool according to an embodiment.
FIG. 7 illustrates a process for determining which information to display according to an embodiment.
FIG. 8 illustrates hardware elements of a system for providing a layout tool according to an embodiment.

### DETAILED DESCRIPTION

Illustrative embodiments of the present disclosure will be described below in more detail with reference to the accompanying drawings. The inventive features may, however, be embodied in different forms and should not be construed as limited to the embodiments set forth herein. Rather, these embodiments are provided so that this disclosure will be thorough and complete, and will fully convey the scope of the present claims to those skilled in the art. Throughout the disclosure, like reference numerals refer to like parts throughout the various figures and embodiments.

It will be understood that, although the terms "first" and/or "second" may be used herein to describe various elements, these elements should not be limited by these terms. These terms are only used to distinguish one element from another element. For instance, a first element discussed below could be termed a second element without departing from the teachings of the present disclosure. Similarly, the second element could also be termed the first element.

Descriptions of placements in the below are generally given relative to a plan view of a design of a device. For example, when two elements are described as overlapping, it means that in an integrated circuit having a plurality of vertically stacked layers, the two elements appear to overlap when viewed from above, and when two elements are described as adjacent, it means no other pertinent element is disposed between them (for example, no other element on the same layer disposed between them, but without being limited to that example).

The drawings are not necessarily to scale and in some instances, proportions may have been exaggerated in order to clearly illustrate features of the embodiments.

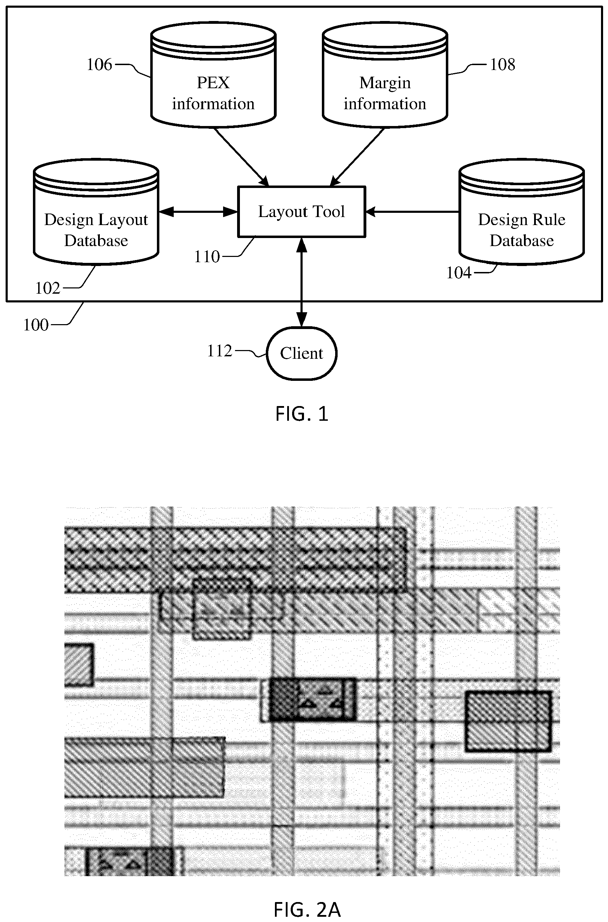

FIG. 1 illustrates a system 100 for performing layout of a device according to an embodiment. The system comprises a design layout database 102, a design rule (DR) database 104, a parasitics information (PEX) database 106, a margin information database 108, and a layout tool 110.

The layout tool 110 provides an interface between the system 100 and a client 112. In the embodiments described therein, the client 112 may be a person, and the layout tool 110 may include an interactive graphical user interface (GUI). However, embodiments are not limited thereto, and in embodiments the layout tool 110 may include an application programming interface (API) for communicating with a client 112 that is, for example, a software tools for performing automated layout; in such an embodiment, the information provided and received by the system 100 thru the layout tool 110 as described below may instead be provided and received through an API.

The layout tool 110 provides information regarding elements in a region of the layout and accepts commands to select, move, and/or reshape those elements.

The information on the elements provided by the layout tool 110 may include information on the shape and location of each element. The information on a location of an element may include horizontal and vertical positions defining a perimeter of the element and an indication of a layer that the element is in. The information on the location may be provided graphically, numerically, or both.

In embodiments, graphically providing the information on the locations of the elements may include drawing polygons indicating the respective perimeters of each element on a display, and filling the polygons with an indication of the layer that the respective element resides in. In embodiments, a fill pattern, a color, or both may be used to indicate the layer. In embodiments, the fill for the polygons is partially transparent so that overlapping elements disposed on respective different layers are visible.

The information provided by the layout tool 110 may further include rule information on applicable ground rules for the region of the layout, information on margins of the applicable ground rules, information on layout dimensions relevant to the applicable ground rules, information on parasitics dependent on those layout dimensions, or combinations thereof. The rule information provided by the layout tool 110 may further include a violation indication that indicates whether a layout dimension conforms to the applicable ground rule, violates the applicable ground rule but conforms to a margin for that ground rule, or violates the margin for that ground rule.

When the information on the shapes and locations of elements is provided by drawing and filling polygons on a display, as described above, the rule information may be provided by an overlay element displayed in proximity to the corresponding elements. In embodiments, the overlay element may display only pertinent information from the rule information, as will be described below. In embodiments, the overlay element may be color coded to provide the violation indication.

The design layout database 102 (hereinafter, layout database 102) includes information on the placement of elements of the device being designed. For example, in a device for fabrication as an integrated circuit on a substrate comprised of a semiconductor, the integrated circuit may have a plurality of layers disposed on the substrate. The elements may include areas comprised of doped semiconductor, areas comprised of a metal, areas comprised of insulator, areas comprised of non-crystalline semiconductor (for example, polysilicon), and the like. Generally, the areas of the elements correspond to polygonal regions of the substrate or polygonal regions of one or more of a plurality of layer of the integrated circuit.

The information in the layout database 102 may originally be generated by the system 100 or by another EDA tools. The information in the layout database 102 may be read and modified by the system 100.

The DR database 104 includes ground rules governing spatial relationships of and between the elements of a device. The ground rules may include limitations on the dimensions of elements, such as minimum and/or maximum widths, lengths, and/or ratios for elements. The ground rules may also include limitations on relationships between elements, such as minimum spacings between elements, maximum length of adjoining runs of elements, minimum or maximum length, widths, and/or areas of overlap of elements, maximum extent to which an element can extend past another element, and the like. A ground rule on relationships between elements may apply to elements in a same layer or to elements in respective different levels.

The information in the DR database 104 may be specific to a particular manufacturing process and may be provided by a source outside the system 100. Generally, the system 100 does not modify the information in the DR database 104.

The PEX database 106 includes parasitics information on electronic properties of an element according to the configuration of the element and the placement of other elements nearby. Parasitics information can include information on capacitance, resistance, and inductance. For example, the PEX database 106 may include information for calculating a parasitic capacitance between two adjacent elements disposed on a same layer, a parasitic capacitance between two elements in respective different layers that overlap, and the like.

The margin database 108 includes information on margins for the ground rules in the DR database 104. The margin information indicates a value for the respective ground rule that may incur higher risk of reduced manufacturing yield, reduced performance, and/or reduced durability, but that may still result in an acceptable number of working devices that meet the requirements of the design.

Margin values may be fab-process specific, and may be derived through silicon experiments, as well as from process assumptions, DR calculations, and other means. A layout that violates the limits of one or more ground rules but stays within the limits of the margin for the ground rules may be referred to as a sub-ground-rule layout. For example, when a DR for two elements of a design specifies a separation of 50 nanometers (nm) and a margin for that DR is 25 nm on the target fab process, a layout wherein the two elements are separated by 32 nanometer is a sub-ground-rule layout.

In some embodiments, the margin database 108 or use of the margin database may be disabled. In such embodiments, displays of the margin values such as shown in the examples below may be omitted, determinations of whether geometries of a layout comply with the margin values may be omitted, and indications of whether a margin violation has occurred may not be provided.

A sub-ground-rule layout may be used to create, for example, special constructs, exploratory constructs, and design optimizations. The process of creating such sub-ground-rule layouts can consume a substantial amounts of time and resources, especially when all the relevant design information is not readily available to the entity designing the layout.

The system 100 reduces the time and resources needed to create and optimize a sub-ground-rule layout by providing the relevant design information in real-time. In particular, the system 100 may provide ground rule information, margin information, parasitics information, or both for the sub-ground-rule layout. In embodiments, to prevent information overload, the system 100 provides such information according to a determination of the information's relevance. The system 100 may provide such information as an immediate response to a command regarding the layout received from the client 112 through the interface presented by the layout tool 110.

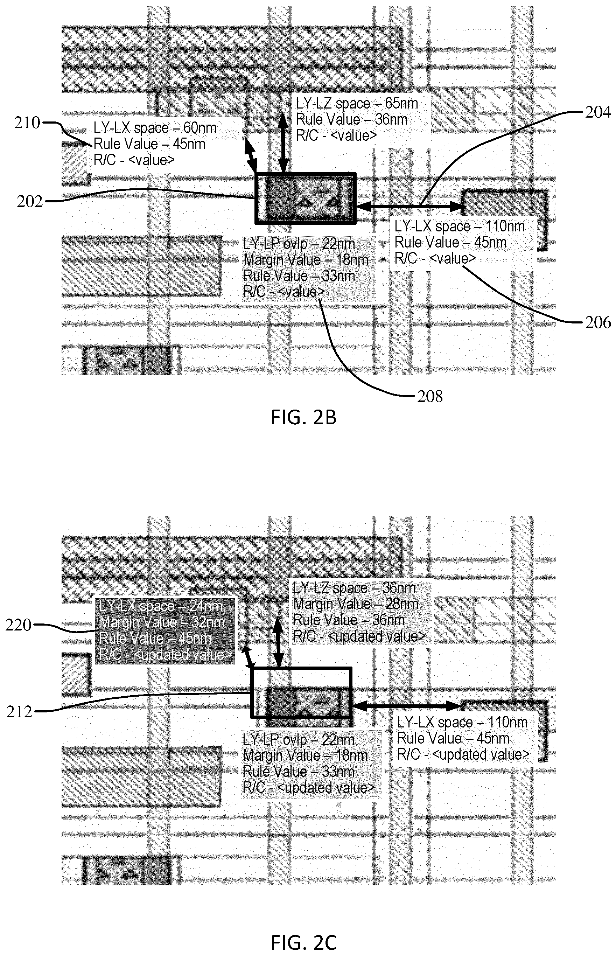

FIG. 2A illustrates a layout of a device according to an embodiment. In particular, FIG. 2A illustrates a layout of a device such as might be output on a display by the layout tool 110. Although FIG. 2A and related FIGS. 2B and 2C are provided as gray-scale drawings, in embodiments the layout and associated overlays may be displayed in color.

The layout of the device comprises a plurality of polygons representing elements of the design. Fill patterns, color, or both may be used to indicate a composition of an element (such as a doping type and/or concentration, a material type such as metal, polysilicon, et cetera) and/or a layer in which the element is disposed.

FIGS. 2B and 2C illustrate operations on the layout of a device shown in FIG. 2A that may be performed by a layout tool according to an embodiment.

FIG. 2B shows a response of the layout tool to receiving an element selection command from a client through an interface of the layout tool. In embodiments wherein the layout is provided to the client graphically through a GUI, the element selection command may, for example, correspond to a mouse click in the region of the GUI corresponding to the element, but embodiments are not limited thereto. In other cases, the element selection command may correspond to the input of a name or other identifier of the element.

In the illustrated embodiment, the layout tools may acknowledge the element selection command by indicating the selected element such as by overlaying a selection polygon 202 over the element, as shown in FIG. 2B.

The layout tool may then calculate (as necessary) the pertinent layout information for the selected element, determines whether that layout information complies with the applicable ground rules and/or applicable margins, and select which information is to be provided to the client in response to the element selection command, as described below. The selected design information is then provided to the client.

In embodiments shown in FIG. 2B wherein the layout is provided to the client graphically through a GUI, the selected information may be provided as overlays in proximity to respective pertinent dimensions, and may include an indication of that dimension.

For example, as shown in FIG. 2B, when the selected design information concerns a first ground rule "LY-LX space" concerning a separation between two elements, the layout tool may display an arrow 204 corresponding to the spacing being evaluated under the first ground rule and a first overlay 206 in proximity to the arrow 204 and displaying the name of the first ground rule (here, " LY-LX space"), a current value of a first layout measurement corresponding to the first ground rule (here, "110 nm"), the value of the first ground rule (here, "45 nm"), and parasitics information such as a resistance value, a capacitance value, or both (here represented by "R/C <value>"). The first overlay 206 may have a color-coded fill color (such as white or green, for example) to indicate that the current value of the first layout measurement is in compliance with the first ground rule.

For another example, as shown in FIG. 2B, when the selected design information concerns a second ground rule "LY-LP ovlp" concerning an overlap of two elements, the layout tool may display a second overlay 208 in proximity to the area of the overlap and displaying the name of the second ground rule (here, "LY-LP ovlp"), the current value of a second layout measurement corresponding to the second ground rule (here, "22 nm"), a margin associated with the second ground rule (here, "18 nm"), the value of the second ground rule (here, "33 nm"), and parasitics information such as a resistance value, a capacitance value, or both (here represented by "R/C <value>"). The second overlay 206 may have a color-coded fill color (such as gray or orange, for example) to indicate that the current value of the second layout measurement is not in compliance with the second ground rule but is within the margin associated with the second ground rule.

In the embodiment shown in FIG. 2B, the first overlay 206 does not display the margin information displayed in the second overlay 208 because, unlike for the second overlay 208, the current value of the first layout measurement is in compliance with the first ground rule, and therefore the margin information associated with the first ground rule is not considered currently likely to be useful to the entity using the layout tool.

FIG. 2C shows a response of the layout tool to receiving an element alteration command from a client through an interface of the layout tool. The element alteration command may indicate a new location for an element, a new shape for the element, or both. In embodiments wherein the layout is provided to the client graphically through a GUI, the element alteration command may, for example, correspond to a mouse click-and-drag operation in the region of the GUI corresponding to the element, but embodiments are not limited thereto. In other cases, the element alteration command may correspond to the input of a name or other identifier of the element, an amount of horizontal movement of the element or one or more vertices of the element, and an amount of vertical movement of the element or one or more vertices of the element.

In the illustrated embodiment, the layout tools may acknowledge the element alteration command by indicating the new position and shape of the altered element, such as by displaying an altered shape indication polygon 212 on the display, as shown in FIG. 2C.

The layout tool then calculates the pertinent altered layout information and parasitics information for the altered element, based on the altered position and/or shape thereof, then determines whether that altered layout information complies with the applicable ground rules and/or applicable margins, and selects which information is to be provided to the client in response to the element alteration command, as described below. The selected information may be provided to the client in the manner described with reference to FIG. 2B.

In embodiments such as those wherein the element alteration command corresponds to a mouse click-and-drag operation, new movements of the mouse as the drag is performed may correspond to new element alteration commands, and accordingly the selected information may be updated as the shape is dragged. Which information is selected for display may change as the shape is dragged. For example, as the selected shape indicated by the polygon 202 in FIG. 2B is dragged from a ground-rule conformant position in FIG. 2B to a position that violated both the applicable ground rule and associated margin, the corresponding overlay 210 in FIG. 2B having a white background and displaying the ground rule name, layout dimension value, rule value and parasitics information may change to an updated corresponding overlay 220 in FIG. 2C having a black background and displaying the ground rule name, updated layout dimension value, margin value, rule value, and updated parasitics information.

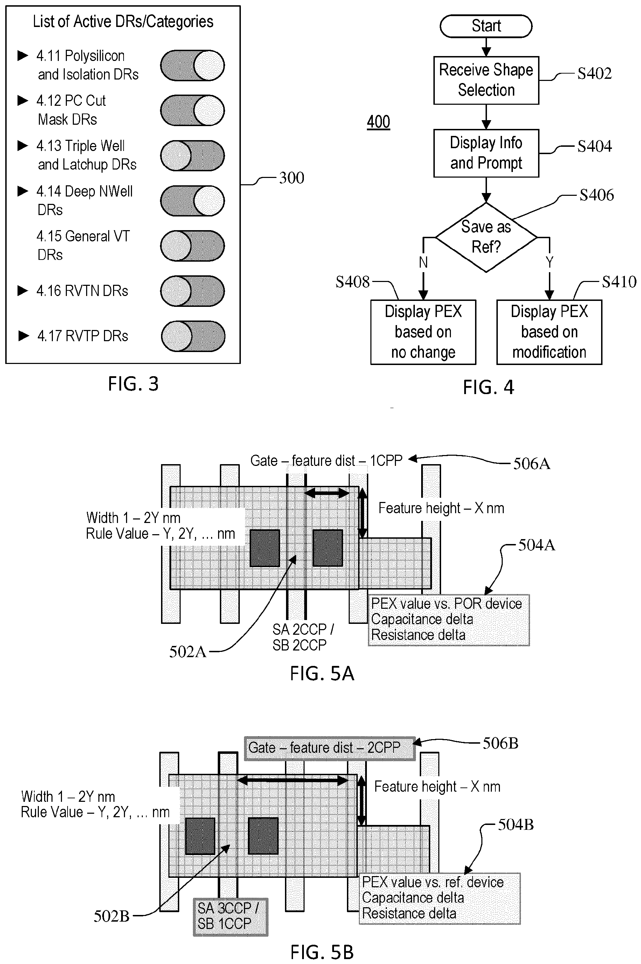

FIG. 3 illustrates an interface 300 for selecting ground rules or groups of ground rules according to an embodiment. In embodiments, only values corresponding to ground rules selected via the interface 300 and the corresponding margin values are displayed by the layout tool during operations such as shown in FIGS. 2B and 2C.

In the interface 300, a control adjacent to a ground rule name or a name for a group of ground rules may be selected to toggle between a selected and an unselected state. Further details of the operation of the interface 300 will be readily understood by a person of ordinary skill in the related arts, and accordingly a detailed description is omitted for brevity.

In some embodiments, ground rules deselected via the interface 300 are not used to select the indication (such as the color-coding of the overlays in FIGS. 2B and 2C) of whether a ground rule violation or margin violation has occurred. In other embodiments, a separate interface may be provided for selecting which design rules are used to select those indications.

FIG. 4 illustrates a process 400 for updating a reference layout performed by a layout tool according to an embodiment.

The parasitics information provided to the client by the layout tool may be relative to the reference layout. That is, when an element is altered by changing the position and/or shape of the element, the layout tool may display a change (a "delta") in a parasitic value, such as a parasitic resistance delta or a parasitic capacitance delta, caused by the alteration of the element. The reference layout may be different than the layout currently being expressed to the client. For example, in an embodiment including a GUI, the displayed layout on may be different than the reference layout, in that one or more elements in the displayed layout may have different shapes, locations, or both than the corresponding element in the reference layout. In some cases, the reference layout may include elements not included in the displayed layout, the displayed layout may include elements not included in the reference layout, or both.

The reference layout comprises a plurality of reference elements. After an element is altered as described above, the client may instruct the layout tool to replace the reference element corresponding to the altered element with the altered element, after which delta values may be computed based on the new reference layout that incorporates the altered element.

At S402, the layout tool receives a selection of an element. The element may be an altered element that has a shape, a position, or both that are different from the corresponding element in the reference layout.

At S404, in response to the selection of the element, the layout tool may provide a prompt to the client, soliciting an indication of whether the selected element should be incorporated into the reference layout as a reference element ("Ref').

At S406, the layout tool receives an indication from the client of whether the selected element should be incorporated into the reference layout.

In response to the client indicating at S406 that the selected element should be incorporated into the reference layout for parasitics determination, in an embodiment the layout tool incorporates the selected element into the reference layout. If there was already a corresponding element to the selected element in the reference layout, the selected element replaces the corresponding element. The process 400 then proceeds to S410.

In another embodiment, the incorporation of the selected element into the reference layout is temporary, and the selected element is only used for parasitics calculations until it is deselected. If there was already a corresponding element to the selected element in the reference layout, the selected element is substituted for the corresponding element until the selected element is unselected.

In response to the client indicating at S406 that the element should not be incorporated into the reference layout, the process 400 proceeds to S410.

At S408, parasitics information is updated and displayed based on the unmodified reference layout. In an embodiment, the parasitics information that is updated and displayed may include parasitics information corresponding to the selected element and corresponding to elements in proximity to the selected element, but embodiments are not limited thereto.

At S410, parasitics information is updated and displayed based on the modified reference layout that incorporates the selected element. In an embodiment, the parasitics information that is updated and displayed may include parasitics information corresponding to the selected element and corresponding to elements in proximity to the selected element, but embodiments are not limited thereto.

In embodiments, when the selected element has the same shape and position as the corresponding element in the reference layout, steps S404, S406, and S410 may not be performed, and the process 400 may proceed directly from S402 to S408.

FIGS. 5A and 5B illustrate operations related to parasitics information performed by a layout tool according to an embodiment. The example of FIGS. 5A and 5B is presented in the context of an embodiment using a GUI to communicate with a client, but embodiments are not limited thereto.

In FIG. 5A, a gate element 502A corresponding to a first configuration of a layout is selected. The first configuration of the layout may be a plan-of-record (POR) layout that corresponds to the current reference layout.

In response to the selection of the gate element 502A, information including parasitics information corresponding to the gate element 502A and other elements in proximity to the gate element 502A is presented, such as shown in overlay 504A. The information presented is calculated based on the configuration of the gate element 502A in the first configuration of the layout.

In FIG. 5B, a gate element 502B corresponding to a second configuration of a layout is selected. The gate element 502B corresponds to a modified version of the gate element 502A shown in FIG. 5A. In the example, the gate element 502B corresponds to moving the gate element 502A one contacted poly pitch (CPP, a process-specific value) to the left.

In response to the selection of the gate element 502B, information including parasitics information corresponding to the gate element 502B and other elements in proximity to the gate element 502B is presented, such as shown in overlay 504B. The information presented is calculated based on replacing or temporarily substituting the gate element 502B for the gate element 502A. In FIGS. 5A and 5B, variables shown as X, Y, and 2Y would actually be design- and process-specific numerical values.

Note that the change in the presented information between FIGS. 5A and 5B includes changes in the fill color of the overlays that may indicate whether a ground rule or margin for a ground rule has been violated. For example, the overlay 506A corresponding to the gate jog distance in FIG. 5A has a white fill such as may indicate compliance with an applicable ground rule, while the overlay 506B corresponding to the gate feature distance in FIG. 5B has a gray fill such as may indicate violation of that ground rule but compliance with a margin for that ground rule.

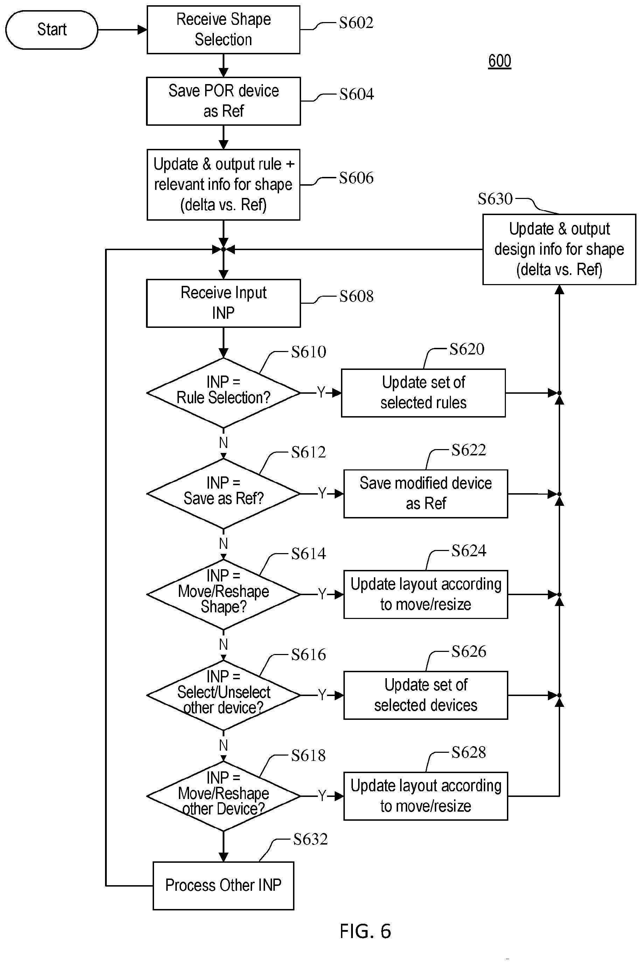

FIG. 6 illustrates a process 600 for processing input from a client performed by a layout tool according to an embodiment. The reception of inputs and outputting of information by the process 600 may be performed through a GUI when the layout tool is interacting with a person, or performed through an API when the layout tool is interacting with another software program.

At S602, the process 600 receives an indication of a selection of a shape within the layout being processed by the process 600. A group of proximal shapes corresponds to a device, and will be recognized as such by the layout too. Generally, operations described below as applying to shapes may also apply to devices, and vice-versa.

At S604, the process 600 saves the plan-of-record device corresponding to the selected shape as a reference device. The plan-of-record device may correspond to the entire layout or may correspond to a portion thereof.

At S606, the process 600 produces and outputs one or more collections of information corresponding to one or more ground rules that are relevant to the selected shape. Each collection of information may include an indication (such as a name, numerical designator, or both) of the corresponding ground rule and a value for a measurement from the layout (such as a distance, area, ratio, or the like) that corresponds to that ground rule. In the embodiment shown in FIGS. 2B and 2C, collections of information may correspond to respective overlays such as overlay 206, overlay 208, or overlay 210.

The ground rules corresponding to the collections of information may be restricted to ground rules selected via an interface such as shown in FIG. 3. Accordingly, in some embodiments, collections of information for unselected ground rules are not produced or output at S606. In other embodiments, collections of information for unselected ground rules may be produced but are not output at S606.

Each collection of information may also include one or more selected from a group comprising a value for the corresponding ground rule, a margin for that ground rule, and one or more parasitics values or parasitics delta values having a correspondence with the measurement from the layout. The determination of which selection to make from the group may depend on a mode of the layout tool, a display option selection, a degree of conformance of the measurement from the layout with the ground rule or associated margin, or combinations thereof. When one or more parasitics values or parasitics delta values are selected, the one or more parasitics values or parasitics delta values may be computed based on a reference layout.

Each collection of information may further include an indication of whether the measurement from the layout violates the ground rule corresponding to the collection of information, violates the margin associated with that ground rule, or both.

At S608, the process 600 receives an input. Steps S610 through S618, described below, correspond to determining a type of the received input and proceeding to the appropriate step for processing the input according to that type. The order shown for steps S610 through S618 is merely illustrative, and embodiments are not limited thereto. In embodiments, the order of steps S610 through S618 may be changed, one or more of steps S610 through S618 may be omitted, one or more additional steps may be added, or combinations thereof.

At S610, the process 600 determines whether the input relates to rule selection. When the input relates to rule selection, the process 600 proceeds to S620; otherwise, the process 600 proceeds to S612.

At S612, the process 600 determines whether the input relates to updating the reference layout. When the input relates to updating the reference layout, the process 600 proceeds to S622; otherwise, the process 600 proceeds to S614.

At S614, the process 600 determines whether the input relates to moving and/or reshaping the selected shape. Reshaping the selected shape may include resizing the selected shape. When the input relates to moving and/or reshaping the selected shape, the process 600 proceeds to S624; otherwise, the process 600 proceeds to S616.

At S616, the process 600 determines whether the input relates to device selection. When the input relates to device selection, the process 600 proceeds to S626; otherwise, the process 600 proceeds to S612.

At S618, the process 600 determines whether the input relates to moving and/or reshaping one or more devices. Reshaping a device may include resizing the device. When the input relates to moving and/or resizing one or more devices, the process 600 proceeds to S628; otherwise, the process 600 proceeds to S632.

At S620, the process 600 updates the set of selected ground rules according to the input received at S608. The process 600 then proceeds to S630.

At S622, the process 600 incorporates the selected device into the reference layout. In embodiments, the incorporation of the selected device replaces a corresponding device in the reference layout if one exits. In embodiments, the replacement may only be temporary, according to a preference or input received by the layout tool. The process 600 then proceeds to S630.

At S624, the process 600 updates the layout according the movement and/or reshaping of the selected shape. The process 600 then proceeds to S630.

At S626, the process 600 adds or removes a device from the set of selected devices in accordance with the input received at S608. In some embodiments, only one device may be selected at a time, and selection of a new device will cause the previously selected device, if there is one, to be deselected. The process 600 then proceeds to S630.

At S628, the process 600 updates the layout according the movement and/or reshaping of the one or more devices. The process 600 then proceeds to S630.

At S630, the process 600 updates and outputs design information regarding ground rules, margins, and parasitics according to any alterations in the layout, selected ground rules, selected shape, selected devices, or combinations thereof made by the previously-performed step of process 600. The updating and outputting of the information may be performed as described with respect to FIGS. 2B, 2C, 3, 4, 5A, or 5B, or combinations thereof. The process 600 then returns to S608.

At S632, the process 600 performs decoding and processing of inputs other than those recognized by S610 through S618; such decoding and processing is outside the scope of this disclosure, and description thereof is therefore omitted. From S632, the process 600 may, according to the input received, return to S608 or (not shown) may exit.

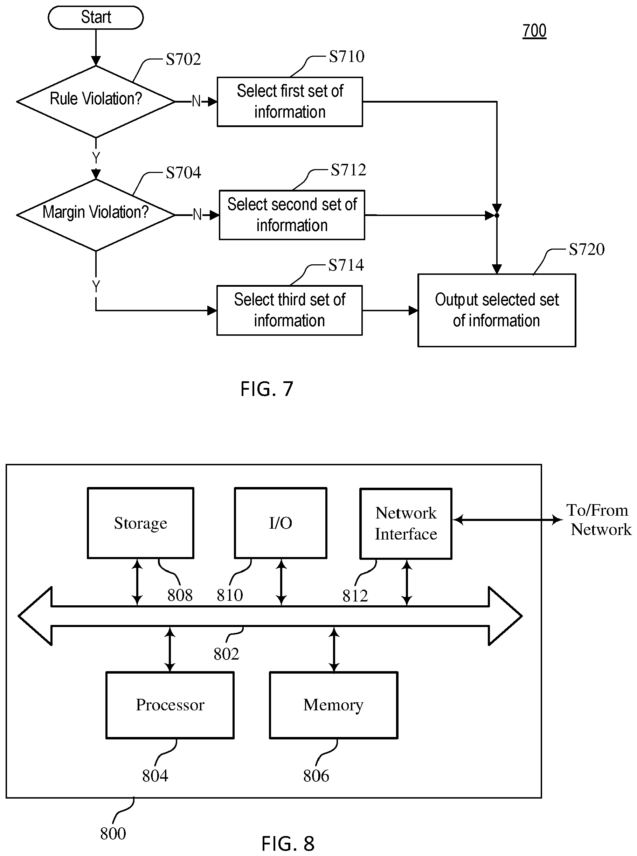

FIG. 7 illustrates a process 700 for determining which information to output such as may be performed by a layout tool according to an embodiment. The process 700 selects the information to output based on the likely present utility of the information in the layout design process being performed using the layout tool. The selections made by process 700 as described below are illustrative, and embodiments are not limited thereto.

At S702, the process 700 determines whether a dimension of a layout, such as, for example, a distance, and area, or an aspect ratio, violates a ground rule of a set of selected ground rules. When the dimension violates the ground rule, the process 700 proceeds to S704; otherwise, the process 700 proceeds to S710.

At S704, the process 700 determines whether the dimension of the layout violates a margin associated with the ground rule. When the dimension violates the margin, the process 700 proceeds to S714; otherwise, the process 700 proceeds to S712.

At S710, the process 700 selects a first set of information to be output. In an embodiment, the first set of information includes the dimension of the layout, an indication of the ground rule, a value of the ground rule, and parasitics information related to the dimension. For example, when the dimension is a separation between two elements, the parasitics information may include a parasitic capacitance calculated using the separation. For another example, when the dimension is an aspect ratio of an element, the parasitics information may include a resistance calculated using the aspect ratio.

In this case, because the ground rule is not violated and on the assumption that the value of the margin associated with the ground rule is not likely to be useful in the design process except when the ground rule is violated, the margin value is not selected for output.

At S712, the process 700 selects a second set of information to be output. In an embodiment, the second set of information includes the dimension of the layout, an indication of the ground rule, a value of the ground rule, a value of the margin of the ground rule, and parasitics information related to the dimension.

In this case, because the ground rule is violated but the margin is not violated, both the value of the ground rule and the value of the associated margin are likely to be currently useful in the design process, and accordingly both are selected for output.

At S714, the process 700 selects a third set of information to be output. In an embodiment, the third set of information includes the dimension of the layout, an indication of the ground rule, a value of the margin of the ground rule, and parasitics information related to the dimension.

In this case, because the margin is violated and on the assumption that the value of the ground rule is unlikely to be useful unless the dimension is in compliance with the margin, the ground rule value is not selected for output. However, in another embodiment, the value of the ground rule might be assumed to be likely to be useful in this case, and therefore the ground rule value would be selected for output at S714 in such an embodiment.

At S720, the process 700 outputs the selected set of information.

FIG. 8 illustrates hardware elements of a system 800 for providing a layout tool according to an embodiment.

The apparatus 800 includes a processor 804, a memory 806, storage 808, input/output (I/O) interfaces 810, and a network interface 812. In some embodiments, one or more of the components shown in FIG. 8 may be absent from the apparatus 800.

The memory 806 and the storage 808 may each include non-transient computer-readable media. The memory 806 may include, for example, volatile memory such as Dynamic Random Access Memory (DRAM), nonvolatile memory such as Flash memory, or combinations thereof, but embodiments are not limited thereto. The storage 808 may include, for example, optical disks, hard disk drives, solid-state drives, or combinations thereof, but embodiments are not limited thereto.

Processor 804 may be configured to support processes described herein. In embodiments, the processes are performed by the processor 804 executing computer programming instructions stored in the memory 806, the storage 808, or both.

In embodiments wherein the layout-related processes disclosed here are performed using a GUI, the GUI may be presented by one or more devices included in the I/O interface 810, or that communicate with the system 800 through the I/O interface 810, through the network interface 812, or both.

In embodiments, the design layout database 102, DR database 104, PEX database 106, or margin information database 108 of FIG. 1, or combinations thereof, may be stored in the memory 106, in the storage 808, in a storage device coupled to the apparatus 800 through the network interface 810, or combinations thereof.

As described above, embodiments provide a layout design method, a layout design tool (layout tool), and an interface for layout design that provide in real-time information useful in the design of sub-ground-rule layouts. The information may include margin information for applicable ground rules, parasitics information derived from the current state of the layout being processed, or both. The applicable ground rules may be ground rules from a set of selected ground rules. The parasitics information may include computed values of a parasitic property in the current layout, a delta value of the parasitic property in the current layout relative to a reference layout, or both.

By providing the additional information described herein in real-time during the layout design process, embodiments substantially reduce the time and resources needed to produce a sub-ground-rule layout for an electronic device.

Aspects of the present disclosure have been described in conjunction with the specific embodiments thereof that are proposed as examples. Numerous alternatives, modifications, and variations to the embodiments as set forth herein may be made without departing from the scope of the claims set forth below. Accordingly, embodiments as set forth herein are intended to be illustrative and not limiting.

In summary, a layout design for an electronic device may be performed by providing a representation of a first layout to a client and providing, in response to an input from the client, a collection of design information calculated according to the first layout to the client. The collection of design information may include a dimension extracted from the first layout, and may further include parasitics information related to the dimension, margin information related to a ground rule applicable to the dimension, or both. The collection of design information may be provided to the client as a real-time response to inputs received from the client. By providing the parasitics information, the margin information, or both to the client, the design of sub-ground-rule layouts may be performed in less time and using fewer resources than would otherwise be the case.

The following embodiments are explicitly described.

### Embodiment 1:

A method for performing layout design for an electronic device, the method comprising:
providing a representation of a first layout to a client; and
providing, to the client in response to an input from the client, a collection of design information calculated according to the first layout, the collection of design information including a dimension extracted from the first layout, and further including parasitics information related to the dimension, margin information related to a ground rule applicable to the dimension, or both.

### Embodiment 2:

The method of embodiment 1, wherein the collection of design information further includes an indication of the ground rule.

### Embodiment 3:

The method of embodiment 1 or 2, wherein the collection of design information further includes a value of the ground rule.

### Embodiment 4:

The method of one of embodiments 1 to 3, wherein the collection of design information further includes an indicator that indicates whether the dimension complies with the ground rule.

### Embodiment 5:

The method of embodiment 4, wherein the indicator further indicates whether the dimension complies with the margin.

### Embodiment 6:

The method of one of embodiments 1 to 5, further comprising:
receiving a ground rule selection input from the client;
selecting a plurality of selected ground rules according to the ground rule selection; and
selecting the ground rule from among the plurality of selected ground rules.

### Embodiment 7:

The method of embodiment 6, further comprising:
in response to receiving the ground rule selection from the client:
updating the collection of design information according to the selected ground rules; and
providing the updated collection of design information to the client.

### Embodiment 8:

The method of one of embodiments 1 to 7, wherein the parasitics information includes a value of a parasitic property related to the dimension.

### Embodiment 9:

The method of one of embodiments 1 to 8, wherein the parasitics information includes a change in a value of a parasitic property related to the dimension relative to a reference layout.

### Embodiment 10:

The method of one of embodiments 1 to 9, further comprising:
in response to receiving an element selection input from the client:
selecting a selected element according to the element selection input,
providing an indication of a selected element to the client,
extracting the dimension based on the selected element,
calculating the collection of design information according to the dimension, and
providing the collection of design information to the client.

### Embodiment 11:

The method of one of embodiments 1 to 10, further comprising:
in response to receiving a reference incorporation input from the client, incorporating an element as configured in the first layout into a reference layout.

### Embodiment 12:

The method of one of embodiments 1 to 11, further comprising:
in response to receiving an element modification input from the client:
modifying the position, shape, or both of an element in the first layout;
updating the collection of design information according to the modification of the element; and
providing the updated collection of information to the client.

### Embodiment 13:

The method of one of embodiments 1 to 12, further comprising:
receiving the input from the client through a graphical user interface (GUI);
providing the representation of the first layout to the client through the GUI; and
providing the collection of design information to the client through the GUI.

### Embodiment 14:

The method of one of embodiments 1 to 13, further comprising:
receiving the input from the client through an application programming interface (API);
providing the representation of the first layout to the client through the API; and
providing the collection of design information to the client through the API.

### Embodiment 15:

A system for performing layout design for an electronic device, the system comprising:
at least one processor,
wherein the system is configured to perform steps comprising:
   providing a representation of a first layout to a client; and
   providing, in response to an input from the client, a collection of design information calculated according to the first layout to the client, the collection of design information including a dimension extracted from the first layout, and further including parasitics information related to the dimension, margin information related to a ground rule applicable to the dimension, or both.

For example, the system may comprise one or more processors which may be configured to perform the steps in that one or more processors are configured to perform the steps.

For example, the system may comprise one processor and the processor may be configured to perform the steps. Alternatively, the system may comprise a plurality of processors and at least one of the plurality of processors may be configured to perform the steps in that one or more processors are configured to perform the steps.

### Embodiment 16:

A non-transient computer readable media (CRM) comprising computer programming instructions which, when executed by one or more processors of a system, cause the system to perform steps comprising:
providing a representation of a first layout to a client; and
providing, in response to an input from the client, a collection of design information calculated according to the first layout to the client, the collection of design information including a dimension extracted from the first layout, and further including parasitics information related to the dimension, margin information related to a ground rule applicable to the dimension, or both.

### Embodiment 17:

A system for performing layout design for an electronic device, the system comprising:
at least one processor,
wherein the system is configured to perform the method of one of embodiments 1 to 14.

For example, the system may be configured to perform the method of one of embodiments 1 to 14 in that one or more processors are configured to perform the steps.

For example, the system may comprise one processor and the processor may be configured to perform the method. Alternatively, the system may comprise a plurality of processors and at least one of the plurality of processors may be configured to perform the steps in that one or more processors are configured to perform the method.

## Claims

1. A method for performing layout design for an electronic device, the method comprising:
providing a representation of a first layout to a client; and
providing, to the client in response to an input from the client, a collection of design information calculated according to the first layout, the collection of design information including a dimension extracted from the first layout, and further including parasitics information related to the dimension, margin information related to a ground rule applicable to the dimension, or both.

2. The method of claim 1, wherein the collection of design information further includes an indication of the ground rule.

3. The method of claim 1 or 2, wherein the collection of design information further includes a value of the ground rule.

4. The method of one of claims 1 to 3, wherein the collection of design information further includes an indicator that indicates whether the dimension complies with the ground rule.

5. The method of claim 4, wherein the indicator further indicates whether the dimension complies with the margin.

6. The method of one of claims 1 to 5, further comprising:
receiving a ground rule selection input from the client;
selecting a plurality of selected ground rules according to the ground rule selection; and
selecting the ground rule from among the plurality of selected ground rules.

7. The method of claim 6, further comprising:
in response to receiving the ground rule selection from the client:
updating the collection of design information according to the selected ground rules; and
providing the updated collection of design information to the client.

8. The method of one of claims 1 to 7, wherein the parasitics information includes at least one of:
a value of a parasitic property related to the dimension, and
a change in a value of a parasitic property related to the dimension relative to a reference layout.

9. The method of one of claims 1 to 8, further comprising:
in response to receiving an element selection input from the client:
selecting a selected element according to the element selection input,
providing an indication of a selected element to the client,
extracting the dimension based on the selected element,
calculating the collection of design information according to the dimension, and
providing the collection of design information to the client.

10. The method of one of claims 1 to 9, further comprising:
in response to receiving a reference incorporation input from the client, incorporating an element as configured in the first layout into a reference layout.

11. The method of one of claims 1 to 10, further comprising:
in response to receiving an element modification input from the client:
modifying the position, shape, or both of an element in the first layout;
updating the collection of design information according to the modification of the element; and
providing the updated collection of information to the client.

12. The method of one of claims 1 to 11, further comprising:
receiving the input from the client through a graphical user interface (GUI);
providing the representation of the first layout to the client through the GUI; and
providing the collection of design information to the client through the GUI.

13. The method of one of claims 1 to 12, further comprising:
receiving the input from the client through an application programming interface (API);
providing the representation of the first layout to the client through the API; and
providing the collection of design information to the client through the API.

14. A system for performing layout design for an electronic device, the system comprising:
at least one processor,
wherein the system is configured to perform steps comprising:
providing a representation of a first layout to a client; and
providing, in response to an input from the client, a collection of design information calculated according to the first layout to the client, the collection of design information including a dimension extracted from the first layout, and further including parasitics information related to the dimension, margin information related to a ground rule applicable to the dimension, or both.

15. A non-transient computer readable media (CRM) comprising computer programming instructions which, when executed by one or more processors of a system, cause the system to perform steps comprising:
providing a representation of a first layout to a client; and
providing, in response to an input from the client, a collection of design information calculated according to the first layout to the client, the collection of design information including a dimension extracted from the first layout, and further including parasitics information related to the dimension, margin information related to a ground rule applicable to the dimension, or both.
